**Europäisches Patentamt**

**European Patent Office**

**Office européen des brevets**

(19)

(11) Veröffentlichungsnummer: **0 003 019**
**B1**

(12) **EUROPÄISCHE PATENTSCHRIFT**

(45) Veröffentlichungstag der Patentschrift: **29.04.81**

(21) Anmeldenummer: **78101393.3**

(22) Anmeldetag: **18.11.78**

(51) Int. Cl.³: **C 03 B  5/02, C 23 D  1/00, C 03 B  3/00**

(54) Verfahren und Vorrichtung zum Schmelzen von Fritten für anorganische oxidische Oberflächenbeschichtungen durch elektrische Widerstandsbeheizung.

(30) Priorität: **30.11.77 DE 2753351**

(43) Veröffentlichungstag der Anmeldung:
**25.07.79 Patentblatt 79/15**

(45) Bekanntmachung des Hinweises auf die Patenterteilung:
**29.04.81 Patentblatt 81/17**

(84) Benannte Vertragsstaaten:
**BE DE FR GB NL**

(56) Entgegenhaltungen:
**DE - A - 2 426 328**
**DE - A - 2 453 057**
**DE - A - 2 603 086**
**DE - C - 832 986**
**FR - A - 938 019**
**US - A - 1 870 636**
**US - A - 1 963 910**
**US - A - 2 122 469**
**US - A - 2 610 217**
**US - A - 2 680 772**

(73) Patentinhaber: **BAYER AG**
**Zentralbereich Patente, Marken und Lizenzen**
**D-5090 Leverkusen 1, Bayerwerk (DE)**

(72) Erfinder: **Rinkes, Hans, Dr.**
**Einsteinstrasse 23**
**D-5000 Köln 80 (DE)**
Erfinder: **Joseph, Werner, Dr.**
**Ludwig-Aschoff-Strasse 20**
**D-5000 Köln 80 (DE)**

## Verfahren und Vorrichtung zum Schmelzen von Fritten für anorganische oxidische Oberflächenbeschichtungen durch elektrische Widerstandsbeheizung

Der Einsatz von elektrischer Energie zum Schmelzen von Glas hat bereits Eingang in die Technik gefunden. Eine Glasschmelze ist ein elektrischer Ionenleiter. Mittels Elektroden wird in der Schmelze ein elektrisches Feld erzeugt und die Energie zum Schmelzen des Glases aufgrund seiner endlichen Leitfähigkeit als Joule'sche Wärme zur Verfügung gestellt. Im Gegensatz zu flammenbeheizten Glasschmelzöfen, bei denen die Wärme über die Badoberfläche auf die Schmelze übertragen werden muß, entsteht bei elektrischen Öfen die Wärme direkt in der Schmelze, so daß elektrisch beheizte Öfen bei erheblich günstigerer Energiebilanz betrieben werden können als flammenbeheizte Öfen. Nachteilig bei flammenbeheizten Öfen ist auch der notwendige Aufwand für Abgasreinigung für die Flammengase, mit denen zudem flüchtige und staubförmige Bestandteile der Glasschmelze ausgetragen werden. Dagegen ist der Anfall an Abgas bei Elektroöfen minimal.

Der Hauptvorteil beim Schmelzen von Glas ist jedoch der, daß mit Elektroöfen eine erheblich verbesserte Läuterung und Homogenisierung der Glasschmelze erreicht wird.

Gerade die besonders vorteilhafte Eignung von Elektroschmelzöfen zur Läuterung und Homogenisierung von Glasschmelzen macht diese für das Schmelzen von Fritten ungeeignet. Während beim Glas ein vollständiges Schmelzen der Rohstoffe mit anschließendem Läutern und Homogenisieren angestrebt wird, um eine homogene Glasphase zu erhalten, wird beim Schmelzen von Fritten für anorganische oxidische Oberflächenbeschichtungen ein unvollständiger Schmelzprozeß, bei dem eine gewisse teilkristallinität erhalten wird, die als Keim für beim Abkühlen erwünschte Teilrekristallisation vorhanden sein muß, angestrebt. Derartige Keime sind bekanntlich als Inhomogenitäten für eine definierte Rekristallisation zur Trübung von Email- oder Keramikfritten beim Aufschmelzen auf metallische oder keramische Substrate notwendig.

In der DE—PS 832.986 wurde bereits ein Elektroofen zum Erschmelzen von Emails vorgeschlagen. Jedoch unterscheidet sich der bekannte Ofen nicht von herkömmlichen Glasschmelzöfen, indem relativ große Reifeoder Läuterkammern vorgesehen sind. Lediglich zum erneuten Aufschmelzen bereits gefritteter Emails kann danach die Arbeitskammer relativ klein ausgeführt sein. Trotz dieses alten Vorschlags haben Elektroöfen keinen Eingang in die Technik des Emailschmelzens gefunden.

Aufgabe der vorliegenden Erfindung ist es nun, ein Verfahren und eine Vorrichtung zum Schmelzen von Fritten für anorganische oxidische Oberflächenbeschichtungen unter Einsatz von elektrischer Energie zur Verfügung zu stellen, die die spezifischen Erfordernisse des Schmelzens von Emails berücksichtigen.

Die vorliegende Erfindung betrifft daher einen Elektroofen zum kontinuierlichen Erschmelzen von Fritten für anorganische oxidische Oberflächenbeschichtungen, der aus einer im wesentlichen rechteckigen Schmelzkammer, einer von der Schmelzkammer durch ein Tauchwehr getrennten Arbeitskammer, einer Eintragsvorrichtung für die Rohmaterialien, sowie Elektroden zur Übertragung von elektrischer Energie auf die Schmelze besteht, wobei das Verhältnis von der wirksamen Elektrodenfläche zur Badoberfläche der Schmelzkammer kleiner als 0,1 ist. Ein solcher Ofen ist aus der DE—C—832 986 bekannt.

Die Erfindung ist dadurch gekennzeichnet, daß das Verhältnis der horizontalen Querschnittsfläche in der Schmelzkammer zu der der Arbeitskammer größer als 80 ist.

Unter wirksamer Elektrodenfläche im Sinne der vorliegenden Erfindung wird die Summe der Elektrodenoberflächen in Projektion senkrecht zur Schmelzbadoberfläche verstanden. Bei senkrecht in die Schmelze eintauchenden Elektroden wird unter wirksamer Elektrodenoberfläche, also die Summe der Mantelflächen der Elektroden, verstanden. Bei horizontal in die Schmelze eingeführten Elektroden wird unter wirksamer Elektrodenfläche die doppelte Summe der senkrechten Querschnittsflächen in Längsrichtung durch die Elektroden verstanden. Unter wirksamer Elektrodenfläche wird also die Gesamtfläche verstanden, durch die zur Schmelzbadoberfläche parallele Feldlinien senkrecht aus den Elektroden austreten.

Bevorzugt beträgt das Verhältnis von wirksamer Elektrodenfläche zu Bodenfläche der Schmelzkammer zwischen 0,04 und 0,08.

Erfindungsgemäß liegt die Tiefe des Schmelzbades zwischen 5 und 20 cm, vorzugsweise zwischen 10 und 18 cm.

Die Elektroden werden mit Wechselstrom bei Netzfrequenz gespeist. Vorzugsweise wird Dreiphasenstrom verwendet.

Die Anzahl der Elektroden ist daher vorzugsweise eine durch 3 teilbare Zahl. Bevorzugt enthält der Elektroofen 6 oder 9 Elektroden. Als Elektroden sind Reineisenelektroden, Molybdän- oder Zinnoxidelektroden besonders geeignet.

Die Elektroden können senkrecht durch den Ofenboden oder horizontal durch die Seitenwände in die Schmelze eingeführt sein. Vorzugsweise werden die Elektroden im wesentlichen horizontal durch die Seitenwände mit einer solchen Neigung in vertikaler Richtung eingeführt, daß die Öffnung in der Seitenwand zur Einführung der Elektroden an der Außenseite der Seitenwand oberhalb des Schmelzniveaus im Ofen liegt. Dadurch wird ein leichtes Austauschen der Elektroden im Falle einer Reparatur bzw. Zerstörung gewährleistet, ohne daß die Schmelze durch die Offnung für die Elektroden ausfließt.

Das Tauchwehr verhindert, daß ungeschmolzene, auf der Schmelzoberfläche schwimmende Rohstoffteilchen in die Arbeitskammer gelangen und von hier mit dem Entnahmestrom ausgetragen werden.

Erfindungsgemäß wird die Arbeitskammer im Verhältnis zur Schmelzkammer sehr klein ausgeführt, um die Vortrübungsfähigkeit der Schmelze zu erhalten. Das Verhältnis der horizontalen Querschnittsfläche des Schmelzbades in der Schmelzkammer zu der Arbeitskammer soll größer als 80 sein. Bei Öfen mit großer Schmelzkapazität kann das Verhältnis Werte von über 200 erreichen.

Die Eintragsvorrichtung für die Rohmaterialien soll erfindungsgemäß mindestens 50 cm oberhalb des Schmelzbadniveaus liegen. Der Eintrag kann über Schnecken durch eine Öffnung in der Rückwand des Ofens erfolgen. Dabei sollen die Rohmaterialien locker auf die Schmelzbadoberfläche rieseln, so daß diese auf eine möglichst große Fläche der Badoberfläche auftreffen. Vorzugsweise befindet sich die Öffnung für den Batch-Eintrag im Gewölbe des Ofens, so daß eine möglichst große Rieselhöhe und damit eine möglichst breite Streuung der Rohstoffe über die Schmelzbadoberfläche gewahrleistet wird. Die Öffnung im Gewölbe soll dann in der Nähe der Rückwand des Ofens liegen, vorzugsweise etwa 1/5 der Länge der Schmelzkammer von der Rückwand entfernt.

Zum Anfahren des Elektroofens ist zusätzlich eine Flammenheizung vorgesehen, da die nicht geschmolzenen Rohstoffe den elektrischen Strom im allgemeinen nicht leiten. Die Flammenheizung wird abgestellt, sobald die Schmelze eine für die Zufuhr elektrischer Energie ausreichende Leitfähigkeit erreicht hat.

Der erfindungsgemäße Elektroofen wird nachfolgend durch die Zeichnungen näher erläutert.

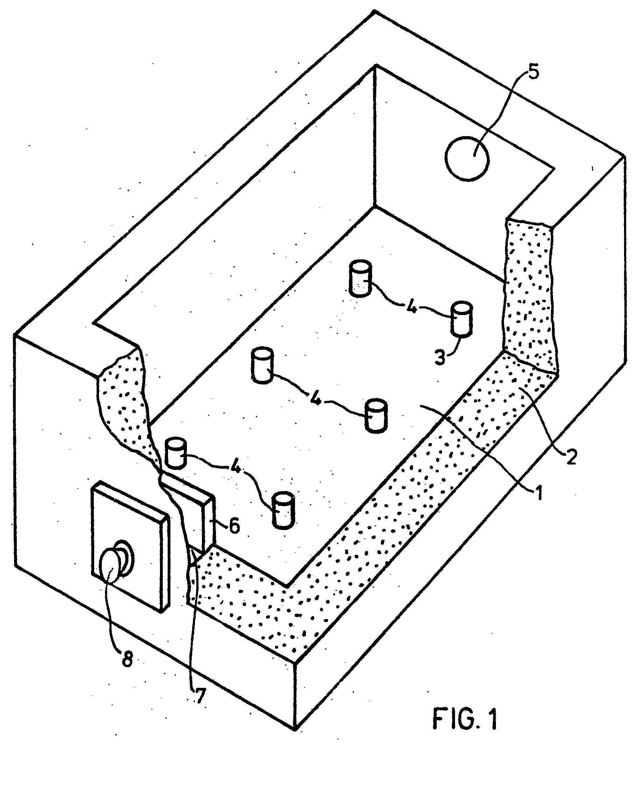

Figur 1 zeigt eine perspektivische Darstellung des erfindungsgemäßen Elektroofens mit senkrecht in die Schmelze eingeführten Elektroden.

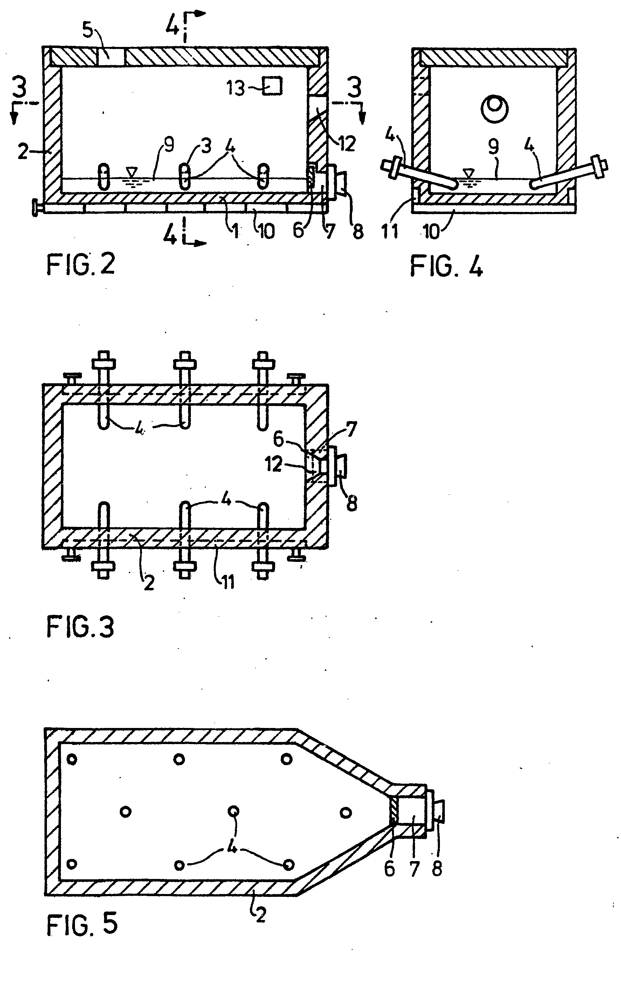

Figur 2 zeigt einen senkrechten Schnitt durch einen Elektroofen mit bevorzugter Elektrodenanordnung und Rohstoffzufuhröffnung im Gewölbe.

Figur 3 zeigt einen Schnitt 3—3 durch den Ofen nach Figur 2.

Figur 4 zeigt einen Schnitt 4—4 durch den Ofen nach Figur 2.

Figur 5 zeigt einen horizontalen Schnitt durch einen Ofen mit sich zum Auslaßende hin verjüngendem Querschnitt.

Den in den Figuren angegebenen Ziffern kommt im einzelnen die folgende Bedeutung zu:

1 Bodenwand des Ofens

2 Seitenwand des Ofens

3 Öffnung für Elektroden

4 Elektrode

5 Öffnung für den Rohmaterialeintrag

6 Tauchwehr

7 Arbeitskammer

8 Auslaßöffnung für die Schmelze

9 Schmelzbadoberfläche

10 Bodenkühlung

11 Seitenwandkühlung

12 Öffnung für Flammenheizung

13 Rauchgasabzug

Gegenstand der vorliegenden Erfindung ist auch das Verfahren zum Erschmelzen von Fritten für anorganische oxidische Oberflächenbeschichtungen unter Anwendung von mittels Elektroden der Schmelze zugeführter elektrischer Energie unter Verwendung des erfindungsgemäßen Elektroofens.

Vorzugsweise erfolgt die Rohstoffzuführung in den Ofen so, daß die gesamte Schmelzbadoberfläche mit ungeschmolzenem Rohstoff bedeckt ist. Die die Schmelzbadoberfläche bedeckende Schicht aus ungeschmolzenem Rohstoff soll vorzugsweise eine Dicke von 1 bis 10 mm, vorzugsweise 3 bis 5 mm, besitzen. Dies wird dadurch gewährleistet, daß der Rohstoffeintrag streuend auf eine möglichst große Oberflache des Schmelzbades erfolgt. Eine hinreichende Menge an ungeschmolzenem Rohstoff auf der Badoberfläche wird ferner durch die Regelung des Entnahmestroms der Schmelze und der Zufuhr an elektrischer Energie gewährleistet. Vorzugsweise erfolgt die Regelung durch Zuführung eines konstanten Stromes bei konstantem Entnahmestrom der Schmelze. Bei der für Ionenleiter charakteristischen Temperatur-Widerstandcharakteristik erhält man auf diese Weise ein sich selbst regelndes System, da sich der Widerstand bei fallender Temperatur erhöht, wodurch bei konstantem Strom die zugeführte Energie erhöht wird, andererseits sich der Widerstand bei sich erhöhender Temperatur erniedrigt, so daß sich die zugeführte elektrische Energie verringert.

Die mittlere Verweilzeit der Schmelze im Ofen beträgt vorzugsweise zwischen 3 und 6 Stunden.

Es wurde gefunden, daß in dem erfindungsgemäßen Schmelzverfahren Fritten für anorganische oxidische Oberflächenbeschichtungen hervorragender Qualität und mit sehr geringen Schwankungen der Eigenschaften der erhaltenen Fritten erschmolzen werden können. Insbesondere wurden Fritten mit sehr geringen Schwankungen der Vortrübung erhalten, wodurch insbesondere bei titangetrübten Fritten und hier besonders bei gefärbten Fritten sehr hohe Trübungskonstanz und Gleichmäßigkeit der Farbe erreicht wird. Ferner wurde gefunden, daß die erfindungsgemäß erschmolzenen Fritten bezüglich der Schwankungen des thermischen Ausdehnungskoffizienten und des Fließverhaltens den in flammenbeheizten Öfen erschmolzenen Fritten überlegen sind.

Überraschenderweise wurde ferner gefunden, daß die bei flammenbeheizter Frittenschmelzung im allgemeinen notwendige Zuführung von Sauerstoffträgern bei dem erfindungsgemäßen Verfahren nicht notwendig ist. Als Sauerstoffträger dienen bei flammenbeheizten Öfen Nitratrohstoffe oder Peroxide. Wegen der bei Einsatz von nitrathaltigen Rohstoffen notwendigen Abgasreinigung werden erfindungsgemäß vorzugsweise nitratfreie Rohmaterialien eingesetzt, ohne daß diese durch vergleichsweise teuere Peroxide als Sauerstoffträger ersetzt werden müssen.

Überraschend wurde ferner gefunden, daß selbst bei Verwendung von Reineisenelektroden Titanweißemails ohne daß Mißfarben auftreten geschmolzen werden können. Es ist bekannt, daß bei Titanweißemails Eisengehalte in Konzentrationen von $10^{-2}\%$ bereits zu Mißfarben führen.

Weitere Vorteile des erfindungsgemäßen Verfahrens ergeben sich daraus, daß die bei flammenbeheizten Öfen auftretenden Verluste an flüchtigen Bestandteilen der Schmelze, wie Fluor, Bor und Alkali, nicht auftreten. Neben der Ersparnis an Rohmaterialien wird damit auch der für die Abgasreinigung zu treibende Aufwand erheblich reduziert.

Mit dem erfindungsgemäßen Verfahren können alle Arten anorganischer oxidischer Fritten für Oberflächenbeschichtungen erschmolzen werden. Insbesondere wurde gefunden, daß auch bei Bleisilikatfritten bereits bei der Netzfrequenz von 50 Hz eine Reduktion zum metallischen Blei nicht beobachtet wird.

## Patentansprüche

1. Elektroofen zum kontinuierlichen Erschmelzen von Fritten für anorganische oxidische Oberflächenbeschichtungen bestehend aus einer im wesentlichen rechteckigen Schmelzkammer, einer von der Schmelzkammer durch ein Tauchwehr (6) getrennten Arbeitskammer (7), einer Eintragsvorrichtung für Rohmaterialen, sowie Elektroden (4) zur Übertragung von elektrischer Energie auf die Schmelze, wobei das Verhältnis von wirksamer Elektrodenfläche zu Bodenfläche der Schmelzkammer kleiner als 0,1 ist, dadurch gekennzeichnet, daß das Verhältnis der horizontalen Querschnittsfläche des Schmelzbades (9) in der Schmelzkammer zu der der Arbeitskammer (7) größer als 80 ist.

2. Elektroofen nach Anspruch 1, dadurch gekennzeichnet, daß das Verhältnis von wirksamer Elektrodenfläche zu Bodenfläche der Schmelzkammer zwischen 0,04 und 0,08 liegt.

3. Elektroofen nach Anspruch 1 und 2, gekennzeichnet durch eine Schmelzbadtiefe von 5 bis 20 cm, vorzugsweise von 10 bis 18 cm.

4. Elektroofen nach einem der Ansprüch 1 bis 3, dadurch gekennzeichnet, daß die Öffnung (5) für den Rohmaterialeintrag in den Ofen mindestens 50 cm oberhalb des Schmelzbadniveaus liegt.

5. Elektroofen nach Anspruch 4, dadurch gekennzeichnet, daß das Gewölbe die Eintragsöffnung (5) für die Rohmaterialien in einer Entfernung von 1/5 der Länge der Schmelzkammer von der Rückwand des Ofens enthält.

6. Verfahren zum Erschmelzen von Fritten für anorganische oxidische Oberflächenbeschichtungen unter Anwendung von Mittels Elektroden der Schmelze zugeführter elektrischer Energie, dadurch gekennzeichnet, daß ein Elektroofen nach Anspruch 1 eingesetzt wird.

7. Verfahren nach Anspruch 6, dadurch gekennzeichnet, daß die Regelung der Energiezufuhr durch Zuführung eines konstanten Stromes bei konstantem Entnahmestrom der Schmelze erfolgt.

8. Verfahren nach einem der Ansprüche 6 oder 7, dadurch gekennzeichnet, daß der Rohstoffeintrag, die Energiezufuhr und der Entnahmestrom so geregelt werden, daß die gesamte Schmelzbadoberfläche mit einer Schicht an ungeschmolzenem Rohstoff einer Dicke zwischen 1 und 10 mm, vorzugsweise 3 bis 5 mm, bedeckt ist.

9. Verfahren nach einem der Ansprüche 6 bis 8, dadurch gekennzeichnet, daß die mittlere Verweilzeit der Schmelze im Ofen 3 bis 6 Stunden beträgt.

## Revendications

1. Four électrique en vue de faire fondre continuellement des frittes pour enduits superficiels oxydiques inorganiques, ce four comprenant une chambre de fusion essentiellement rectangulaire, et chambre de travail (7) séparée de cette chambre de fusion par une vanne plongeante (6), un dispositif pour l'introduction des matières premières, de même que des électrodes (4) destinées à transférer l'énergie électrique à la masse en fusion, le rapport entre la surface active d'électrodes et la surface du fond de la chambre de fusion étant inférieur à 0,1, caractérisé en ce que le rapport entre la section transversale horizontale du bain en fusion (9) contenu dans la chambre de fusion et celle de la chambre de travail (7) est supérieur à 80.

2. Four électrique suivant la revendication 1, caractérisé en ce que le rapport entre la surface active d'électrodes et la surface du fond de la chambre de fusion est compris entre 0,04 et 0,08.

3. Four électriques suivant l'une quelconque des revendications 1 et 2, caractérisé en ce que le bain en fusion a une profondeur de 5 à 20 cm, de préférence, de 10 à 18 cm.

4. Four électrique suivant l'une quelconque des revendications 1 à 3, caractérisé en ce que l'ouverture (5) pratiquée pour l'introduction des matières premières, dans le four est située à au moins 50 cm au-dessus du niveau du bain en fusion.

5. Four électrique suivant la revendication 4, caractérisé en ce que l'ouverture (5) d'introduction des matières premières est pratiquée dans la voûte du four à une distance de la paroi arrière de ce dernier que correspond à 1/5 de la longueur de la chambre de fusion.

6. Procédé en vue de faire fondre des frittes pour enduits superficiels oxydiques inorganiques en appliquant une énergie électrique acheminée à la masse en fusion au moyen d'électrodes, caractérisé en ce qu'on utilise un four électrique suivant la revendication 1.

7. Procédé suivant la revendication 6, caractérisé en ce que le réglage de l'apport d'énergie s'effectue par apport d'un courant constant, la masse en fusion sortant en un courant également constant.

8. Procédé suivant l'une quelconque des revendications 6 et 7, caractérisé en ce qu'on règle l'introduction des matières premières, l'apport d'énergie et le courant de sortie de telle sorte que toute la surface du bain en fusion soit recouverte d'une couche de matière première non fondue en une épaisseur comprise entre 1 et 10 mm, de préférence, entre 3 et 5 mm.

9. Procédé suivant l'une quelconque des revendications 6 à 8, caractérisé en ce que le temps de séjour moyen de la masse en fusion dans le four est de 3 à 6 heures.

## Claims

1. An electric furnace for the continuous melting of frits for inorganic oxidic surface coatings, comprising a substantially rectangular melting chamber, a working chamber (7) separated from the melting chamber by an immersion dam (6), a means for the introduction of raw materials, and electrodes (4) for the transmission of electrical energy to the melt, the ratio of the effective electrode surface area to the area of the bottom of the melting chamber being less than 0.1, characterised in that the ratio of the horizontal cross-sectional area of the molten bath (9) in the melting chamber to that of the working chamber (7) is greater than 80.

2. An electric furnace according to claim 1, characterised in that the ratio of the effective electrode surface area to the area of the bottom of the melting chamber is between 0.04 and 0.08.

3. An electric furnace according to claims 1 and 2, characterised in that the molten bath has a depth of from 5 to 20 cm, preferably from 10 to 18 cm.

4. An electric furnace according to one of claims 1 to 3, characterised in that the opening (5) for the introduction of raw materials into the furnace is situated at least 50 cm above the level of the melt.

5. An electric furnace according to claim 4, characterised in tha the dome contains the opening (5) for the introduction of the raw materials at a distance from the rear wall of the furnace of 1/5th of the length of the melting chamber.

6. A method of melting frits for inorganic oxidic surface coatings using electrical energy which is supplied to the melt by means of electrodes, characterised in that an electric furnace according to claim 1 is used.

7. A method according to claim 6, characterised in that the supply of energy is regulated by supplying a constant current with a constant output stream of the melt.

8. A method according to one of claims 6 or 7, characterised in that the raw material input, the supply of energy and the output stream are regulated in such a way that the whole surface of the molten bath is covered with a layer of unmelted raw material having a thickness of between 1 and 10 mm, preferably 3 to 5 mm.

9. A method according to one of claims 6 to 8, characterised in that the average dwell time of the melt in the furnace is from 3 to 6 hours.

FIG. 1

**FIG. 2**

**FIG. 4**

**FIG. 3**

**FIG. 5**